# EUROPEAN PATENT SPECIFICATION

(11) **EP 4 375 103 B1**
(45) Date of publication and mention of the grant of the patent: **28.05.2025**
(21) Application number: 22943401.4
(22) Date of filing: 19.08.2022
(51) Int. Cl.: B60K 1/04, B60H 1/00, B60K 1/00, B60L 50/64, B60L 50/60, B60L 58/26, B60L 58/27, H01M 10/613, H01M 10/615, H01M 10/625, H01M 10/6556, H01M 10/6568, H01M 50/24, H01M 10/655, H01M 10/6567

(54) **NEW ENERGY BUS**
NEUER ENERGIEBUS
BUS FONCTIONNANT AUX NOUVELLES ÉNERGIES

(30) Priority: 27.05.2022 CN 202210593416
(43) Date of publication of application: 29.05.2024
(73) Proprietor: Yutong Bus Co., Ltd., Zhengzhou, Henan 450061 (CN)
(72) Inventor: HAN, Jinyang, Zhengzhou, Henan 450061 (CN); CHENG, Lei, Zhengzhou, Henan 450061 (CN); JING, Junya, Zhengzhou, Henan 450061 (CN); WANG, Kun, Zhengzhou, Henan 450061 (CN); LI, Long, Zhengzhou, Henan 450061 (CN); ZHAO, Hongyuan, Zhengzhou, Henan 450061 (CN)
(74) Representative: Gulde & Partner
(86) International application number: PCT/CN2022/113475
(87) International publication number: WO 2023/226211

(56) References cited:
- CN-A- 112 918 566
- CN-U- 210 234 715
- CN-U- 210 591 284
- JP-A- 2018 075 945

## Description

### TECHNICAL FIELD

The present invention relates to the field of new energy bus technologies, and specifically, to a new energy bus with a battery module and heat exchange.

### BACKGROUND

High standard safety, low costs, and lightweight are main requirements for the rapid development of the new energy industry. Currently, new energy buses generally adopt a standard battery pack solution. A plurality of battery cells form a battery pack through gluing, bolting, and the like. A plurality of battery packs are connected in a specific serial and parallel connection manner through high and low voltage wiring harnesses, a thermal management pipeline, and the like to form a battery system. The battery system is arranged and mounted on a chassis of the entire vehicle through a bracket, a bolt, and the like. There are some drawbacks to this current manner. For example, the battery packs are mostly bottom-mounted or rear-mounted, which may easily cause damage to the battery packs due to collisions, wading, water immersion, and other factors, increase maintenance costs and affect bus operations. In an extreme case, even an accident such as battery smoking or burning occurs, causing property and personal losses, and the high standard safety requirement cannot be met. In addition, through the integration of battery cells-battery modules-battery packs-the entire vehicle, the space utilization is low, the battery power is damaged, and the user's requirement for high endurance cannot be met.

To solve the current drawbacks, the prior art adopts a top-mounted battery pack solution. Specifically, a battery mounting frame is fixed on a bus top frame, a battery pack is fixed on the battery mounting frame, and then the battery pack is covered with a bus top cover. For example, the Chinese utility model patent with Publication No. CN206201949U adopts this manner.

Using a top-mounted battery pack can solve some problems that exist when the battery pack is placed at the bottom or at the rear. However, the integration manner is still the integration of battery cells-battery modules-battery packs-the entire vehicle, the space utilization is low, and the user's requirement for high endurance cannot be met. The battery pack usually includes a built-in liquid heat exchange plate. There is a flow channel in the liquid heat exchange plate. An air conditioning system is connected to the liquid heat exchange plate. Batteries in the battery pack are heated or cooled through the flow of a liquid, and the air conditioning system also heats or cools a passenger region. In current new energy buses, a passenger region top floor completely separates the battery pack from the passenger region. In addition to exchanging heat with the battery above, the liquid in the liquid heat exchange plate further exchanges heat with the air below and other objects on a top portion of the bus. This part of heat is directly dissipated to the air and cannot be effectively used, which results in low heat utilization of the entire vehicle, increases energy consumption, and shortens an endurance mileage.

Furthermore, JP 2018 075945 A discloses a new energy bus, comprising a bus body, the bus body comprising a bus top frame located on a top portion, a bus top skin covering a top portion of the bus top frame, and a passenger region top floor located below the bus top frame, wherein the bus top frame is fixedly provided with a liquid heat exchange component, the liquid heat exchange component is connected to an air conditioning system, the bus top skin is directly or indirectly mounted with a sealing cover in a sealing manner covering an outer portion of a battery module, a filling body is disposed around the liquid heat exchange component and the passenger region top floor and forms a chamber with the liquid heat exchange component and the passenger region top floor in a surrounding manner, a position on the passenger region top floor corresponding to the chamber is provided with a window in communication with a passenger region, the window is provided with a window body that opens and closes the flow through the window, and the chamber is provided with a blower inside for blowing air to the passenger region through the window.

### SUMMARY

An objective of the present invention is to provide a new energy bus to solve the technical problems in the prior art of low space utilization and low heat utilization of the entire vehicle, resulting in a short endurance mileage.

To achieve the foregoing objective, technical solutions of the new energy bus provided in the present invention according to independent claim 1 are as follows: A new energy bus includes a bus body, and the bus body includes a bus top frame located on a top portion, a bus top skin covering a top portion of the bus top frame, and a passenger region top floor located below the bus top frame, where the bus top frame is fixedly provided with a liquid heat exchange plate, the liquid heat exchange plate is provided with a coolant inlet and a coolant outlet that are connected to an air conditioning system, a top surface of the liquid heat exchange plate is fixedly provided with a battery module, the bus top skin is directly or indirectly mounted with a sealing cover in a sealing manner covering an outer portion of the battery module, a filling body is disposed between the liquid heat exchange plate and the passenger region top floor and forms a sealed chamber with the liquid heat exchange plate and the passenger region top floor in a surrounding manner, a position on the passenger region top floor corresponding to the chamber is provided with a window in communication with a passenger region, the window is provided with a window body that opens and closes the window, and the chamber is provided with a blower inside for blowing air to the passenger region through the window.

Beneficial effects: The battery module is directly mounted on the bus top frame through the liquid heat exchange plate, and is provided with a sealing cover to form a sealed chamber to protect the battery module. Compared with the prior art that requires a complete battery pack, a side plate, a top plate, and other structures of the battery pack are omitted, and an advantage of lightweight is more obvious. More battery modules can be arranged in a same space, which improves the endurance mileage of the new energy bus. By disposing the sealed chamber below the liquid heat exchange plate, disposing the window on the passenger region top floor, and equipping the window with the window body and the blower, when a liquid flows through the liquid heat exchange plate, the top surface exchanges heat with the battery module, the bottom portion exchanges heat with the chamber, and after the window body is opened, the blower blows the heat in the chamber to the passenger region in a form of cold or hot air to cool or heat the passenger region, which reduces power consumption required by the air conditioning system to cool or heat the passenger region, effectively utilizes the heat below the liquid heat exchange plate, improves the heat utilization of the entire vehicle, and increases the endurance mileage. Preferred embodiments are disclosed in the dependent claims.

Further, the bus top skin is provided with an opening at the chamber, so that the liquid heat exchange plate is directly communicated with the chamber. The liquid heat exchange plate is directly communicated with the chamber, and the bottom portion of the liquid heat exchange plate directly exchanges heat with the chamber to heat or cool the chamber. Compared with indirect heat transfer through the bus top skin, the heat transfer efficiency is higher and the heat utilization is higher.

Further, a top portion of the filling body is in a sealing abutment on the liquid heat exchange plate, and a bottom portion of the filling body is in a sealing abutment on the passenger region top floor to form the chamber; or the liquid heat exchange plate is supported on the bus top skin and is in a sealing fit with the bus top skin, a top portion of the filling body is in a sealing abutment on the bus top skin, and a bottom portion of the filling body is in a sealing abutment on the passenger region top floor to form the chamber. The method is reasonably selected according to a size of the opening on the bus top skin to ensure the sealing of the chamber.

Further, the blower is fixedly disposed on a bottom surface of the liquid heat exchange plate. The blower is fixedly disposed on the liquid heat exchange plate to avoid increasing a load on the passenger region top floor.

Further, the window body is rotatably mounted on the passenger region top floor, the new energy bus includes a motor that drives the window body to rotate to open and close the window, the new energy bus further includes a controller for controlling start and stop of the motor and a rotation direction, and the controller is configured to control the motor to open the window when both the battery module and the passenger region are cooled or heated, and control the motor to close the window when only one of the battery module and the passenger region is cooled or heated. The motor and the controller realize the automatic design of opening and closing the window body, without manual operation by personnel, and it is easy to use.

Further, an outer side of an edge of the liquid heat exchange plate is provided with a mounting ear, and the mounting ear is provided with a bolt through hole inside; and the bus top frame is provided with a threaded hole or pre-welded with a nut, the new energy bus includes a bolt running through the bolt through hole of the mounting ear and screwed into the threaded hole or the nut, and the bolt fixes the liquid heat exchange plate on the bus top frame. The liquid heat exchange plate is mounted on the bus top frame through threaded connection for easy disassembly and assembly.

Further, an edge position of the sealing cover is provided with a sealing flange, one of a bottom surface of the sealing flange and a top surface of the bus top skin is provided with a sealing gasket, the sealing flange is provided with a bolt through hole, the bus top skin is provided with a threaded hole or pre-welded with a nut, the new energy bus includes a bolt running through the bolt through hole of the sealing flange and screwed into the threaded hole or the nut on the bus top skin, the bolt fixes the sealing flange on the bus top skin, and the elastic deformation of sealing gasket is to ensure sealing performance between the sealing flange and the bus top skin. By providing a sealing flange and a sealing gasket, the sealing performance between the sealing cover and the bus top skin can be ensured and external rainwater can be prevented from entering the space formed by the sealing cover and the bus top.

Further, an edge position of the sealing cover is provided with a sealing flange, a position on the bus top skin corresponding to the sealing flange is welded with a sealing body, one of a bottom surface of the sealing flange and a top surface of the sealing body is provided with a sealing gasket, the sealing flange is provided with a bolt through hole, the sealing body is provided with a threaded hole or pre-welded with a nut, the new energy bus includes a bolt running through the bolt through hole of the sealing flange and screwed into the threaded hole or the nut on the sealing body, the bolt fixes the sealing flange on the sealing body, and the elastic deformation of sealing gasket is to ensure sealing performance between the sealing flange and the sealing body. By welding the sealing body on the bus top skin and providing the threaded hole or welding the nut on the sealing body, damage to the bus top skin can be avoided. While ensuring the sealing performance between the sealing cover and the bus top, it is ensured that liquid barrier performance and flame retardant performance of the bus top skin are not damaged.

Further, an edge position of the sealing cover is provided with a sealing flange, a top surface of the sealing flange and/or a bottom surface of the bus top skin is provided with an adhesive storage groove, and the adhesive storage groove is configured to store a sealing adhesive to bond the sealing flange and the bus top skin together and ensure sealing performance between the sealing flange and the bus top skin. The sealing cover and the bus top skin are connected by gluing, which not only ensures the sealing performance, but also allows for quickly fixed mounting.

Further, an edge position of the sealing cover is provided with a sealing flange, a position on the bus top skin corresponding to the sealing flange is welded with a sealing body, a bottom surface of the sealing flange and/or a top surface of the sealing body is provided with an adhesive storage groove, and the adhesive storage groove is configured to store a sealing adhesive to bond the sealing flange and the sealing body together and ensure sealing performance between the sealing flange and the sealing body. After the sealing body is provided, damage to the bus top skin can be avoided, and the liquid barrier performance and the flame retardant performance of the bus top skin are not damaged while ensuring sealing.

### BRIEF DESCRIPTION OF THE DRAWINGS

FIG. 1 is a schematic diagram of a top portion of a new energy bus according to the present invention (a sealing cover is not shown);
FIG. 2 is a schematic diagram of collaboration among a battery module, a sealing cover, a bus top skin, and a bus top frame in a new energy bus according to the present invention; and
FIG. 3 is a schematic diagram of collaboration among a sealing cover, a battery module, a bus top frame, and a sealing surface in a new energy bus according to the present invention.

### Reference Numerals:

1. Passenger region; 2. Passenger region top floor; 3. Bus top skin; 4. Liquid heat exchange plate opening; 5. Battery module; 6. Liquid heat exchange plate; 7. Bolt; 8. Mounting ear; 9. Bus top frame; 10. Blower; 11. Window body; 12. Chamber; 13. Sealing cover; 14. Sealing flange; 15. Sealing body; and 16. Sealing gasket.

### DETAILED DESCRIPTION

In order to make the objectives, technical solutions, and advantages of the invention clearer and more comprehensible, the invention is further described in detail in combination with the drawings and embodiments. It should be understood that the specific embodiments described herein serve to explain the invention merely and are not used to limit the invention. That is, the described embodiments are merely part of the embodiments, rather than all of the embodiments, of the invention. The components of the embodiments of the invention generally described and illustrated in the drawings herein may be arranged and designed in a variety of different configurations, within the scope of the claims.

Therefore, the following detailed description of the embodiments of the invention provided in the accompanying drawings is not intended to limit the scope of the invention as claimed, but is merely representative of selected embodiments of the invention.

It should be noted that relational terms such as the terms "first" and "second" that may appear are only used to distinguish one entity or operation from another entity or operation, and do not necessarily require or imply any such actual relationship or order between these entities or operations. Moreover, the terms "including", "comprising", or any other variations thereof that may be provided, are intended to cover non-exclusive inclusion, so that a process, method, object, or device including a series of elements includes not only those elements, but also other elements that are not explicitly listed, or includes elements inherent to the process, method, object, or device. If there are no more restrictions, the element defined by the sentence "including a..." that may be provided, does not exclude in the process, method that includes the element.

In the description of the invention, unless clearly specified and defined otherwise, the terms "mounted", "connected", and "connecting" that may appear should be understood in a broad sense, for instance, it can be a fixed connection, a detachable connection, or an integral connection, it can be a mechanical connection or an electrical connection, it can be a direct connection or indirect connection through an intermediate medium, or it can be the internal communication between two elements. For a person having ordinary skill in the art, the specific meaning of the above-mentioned terms in the invention can be understood through specific circumstances.

In the description of the invention, it should be noted that unless clearly specified and defined otherwise, the term "provided with" that may appear should be construed in a broad sense. For instance, the object that is "provided" may be a part of the body, or it may be arranged separately from the body and connected to the body, and the connection may be a detachable connection or a non-detachable connection. For a person having ordinary skill in the art, the specific meaning of the above-mentioned terms in the invention can be understood through specific circumstances.

The invention will be further described in detail below together with the embodiments.

Specific embodiments of a new energy bus provided in the present invention are as follows:

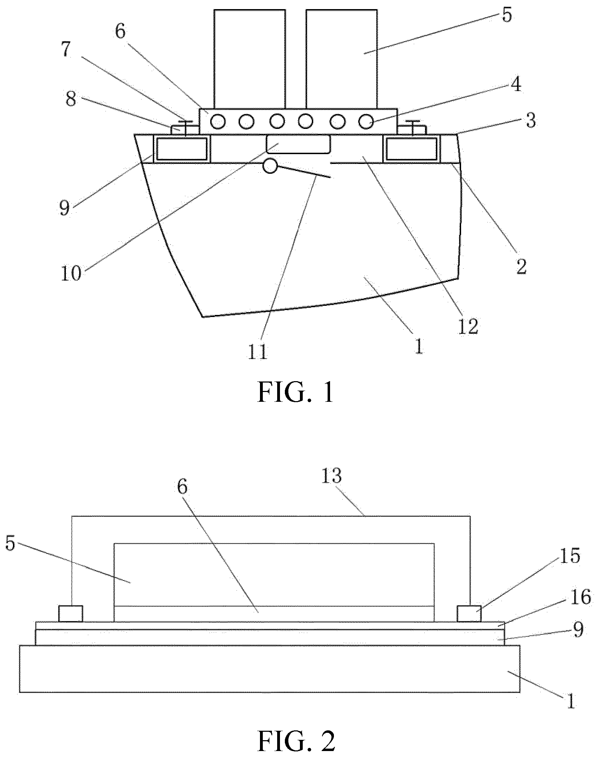

As shown in FIG. 1 to FIG. 3, the new energy bus includes a bus body. The bus body includes a bus top frame 9 and a bus top skin 3 located at a top portion. The bus body is provided with a passenger region 1 inside, a top portion of the passenger region 1 is provided with a passenger region top floor 2, and the passenger region top floor 2 separates the bus top frame 9 from the passenger region 1.

A battery module 5 is fixedly placed on the top portion of the bus body. The battery module 5 is formed by stacking battery cells. When the battery cells are stacked, the battery cells are placed right-side up and poles are arranged upward. A specific molding method of the battery module 5 may be bonded with a structural adhesive, or a plastic bracket, an end plate, a side plate, a binding strap, and the like. The molding method of the battery module 5 is the prior art and is not described in detail herein. A quantity of battery modules 5 is designed and changed according to an actual situation. The battery module 5 may be in a placement direction parallel to a traveling direction of the vehicle or perpendicular to a traveling direction of the vehicle, or be in a mixed placement. In other embodiments, the battery cells in the battery module 5 may be placed sideways or flat, and the poles are arranged toward a horizontal side.

As shown in FIG. 1, first, the top portion of the bus body is fixedly provided with a liquid heat exchange plate 6. The liquid heat exchange plate 6 is provided with a liquid flow channel inside. A plate surface of the liquid heat exchange plate 6 is provided with liquid heat exchange plate openings 4 in communication with the liquid flow channel. Some of the liquid heat exchange plate openings 4 serve as coolant inlets, and the other liquid heat exchange plate openings 4 serve as coolant outlets. The air conditioning system is connected to the coolant inlet and the coolant outlet, and a coolant flows in the liquid heat exchange plate 6 to heat and cool the battery module 5.

The battery module 5 is fixed on a top surface of the liquid heat exchange plate 6 through bonding by using the structural adhesive. Certainly, in other embodiments, the battery module 5 may be fixed on the liquid heat exchange plate 6 with a bolt, or a pressure plate is disposed to press the battery module 5 on the liquid heat exchange plate 6.

As shown in FIG. 1, to fixedly mount the liquid heat exchange plate 6 on the top portion of the bus body, the liquid heat exchange plate 6 is fixedly provided with a mounting ear 8. The mounting ear 8 may be welded to the liquid heat exchange plate 6, or may be integrally machined and molded with the liquid heat exchange plate 6. A quantity of mounting ears 8 is selected according to a size of the liquid heat exchange plate 6 and a position of the bus top frame 9, and the mounting ears 8 may be disposed on a left side and a right side or a front side and a rear side of the battery module 5. Generally, the quantity of mounting ears 8 is greater than 6. The bus top frame 9 is processed with threaded holes, and the mounting ears 8 are provided with bolt through holes. During assembly, the bolts 7 run through the mounting ears 8 and then run into the threaded holes of the bus top frame 9, and the mounting ears 8 and the liquid heat exchange plate 6 are fixed on the bus top frame 9. When the bolts 7 are mounted, the bolts 7 run through the bus top skin 3. In other embodiments, nuts are pre-welded in the bus top frame 9, and the bolts 7 run into the pre-welded nuts of the bus top frame 9 for fixation. In other embodiments, the liquid heat exchange plate 6 may be mounted on the bus top frame 9 by welding or bayonet locking. In other embodiments, a cylinder is used to press and fix the liquid heat exchange plate 6 on the bus top frame 9. When disassembly for repair or replacement is required, quick disassembly may be achieved by disconnecting an air source of the cylinder.

An assembly sequence of the battery module 5, the bus top frame 9, and the liquid heat exchange plate 6 may be flexibly selected. The battery module 5 and the liquid heat exchange plate 6 may be fixed offline first and then assembled onto the bus top frame 9 as a whole. Alternatively, the liquid heat exchange plate 6 may be fixed on the bus top frame 9 first, and then the battery module 5 is fixed on the liquid heat exchange plate 6.

A filling body is disposed between the bus top skin 3 and the passenger region top floor 2. The filling body herein is a spacer plate or other fillers (not shown in the figure). The filling body is in a sealing fit with the liquid heat exchange plate 6 and the passenger region top floor 2 to form a chamber 12, and the heat of the liquid heat exchange plate 6 can be transferred to the chamber 12. To increase the heat transferred between the liquid heat exchange plate 6 and the chamber 12, a position on the bus top skin 3 corresponding to the liquid heat exchange plate 6 is provided with an opening, so that the chamber 12 is directly communicated with the bottom surface of the liquid heat exchange plate 6. An area of the opening on the bus top skin 3 is greater than an area of the liquid heat exchange plate 6. In this case, the top portion of the spacer plate or filler is in a sealing abutment on the liquid heat exchange plate 6 to seal the chamber 12. In other embodiments, the area of the opening on the bus top skin 3 may be less than the area of the liquid heat exchange plate 6. In this case, the liquid heat exchange plate 6 is supported on the bus top skin 3, the sealing between the liquid heat exchange plate 6 and the bus top skin 3 is good, and the top portion of the filling body is in a sealing abutment on the bus top skin 3 to seal the chamber 12. A metal plate with a great heat transfer coefficient is selected as the liquid heat exchange plate 6.

As shown in FIG. 1, the passenger region top floor 2 is provided with a window. Through the window, the chamber 12 is communicated with the passenger region 1. The passenger region top floor 2 is rotatably mounted with a window body 11. The window body 11 can block the window or can make way for the window. A blower 10 is mounted in the chamber 12. Specifically, the blower 10 is mounted on the bottom surface of the liquid heat exchange plate 6. The blower 10 directly faces the window up and down, and the blower 10 can blow air toward the window. The new energy bus is equipped with a motor and a controller for the window body 11. The motor is connected to the window body 11 and can drive the window body to block the window or make way for the window. The controller can control start and stop of the motor and a rotation direction.

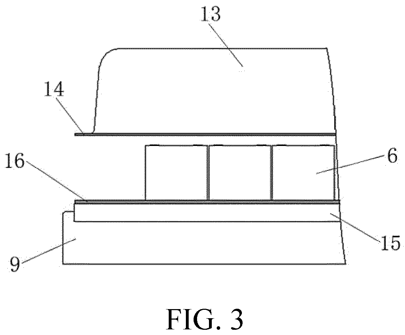

As shown in FIG. 2 and FIG. 3, a sealing cover 13 is further mounted on the top portion of the bus body. The sealing cover 13 covers the battery module 5 and forms a sealed chamber together with the top portion of the bus body. The sealing cover 13 may be made of a composite material, a plastic material, or a metal material. The edge of the sealing cover 13 is provided with a sealing flange 14. The bottom portion of the sealing flange 14 is provided with a flat sealing surface. The sealing flange 14 is preset with through holes.

The top portion of the bus top skin 3 corresponding to the sealing flange 14 is provided with a sealing body 15. The sealing body 15 herein is a metal profile welded to the bus top skin 3. The sealing between the metal profile and the bus top skin 3 is good, and the metal profile is processed with a threaded hole. The metal profile is fixedly provided with a sealing gasket 16. The sealing gasket 16 is made of an elastic material, which may be a silicone pad, a foam pad, or the like. During assembly, the bolt runs through the sealing flange 14 and then is screwed into the threaded hole of the metal profile. The sealing gasket 16 deforms under pressure to achieve sealing. Certainly, in other embodiments, a nut may be pre-welded on the metal profile to be in a sealing fit with a bolt. In other embodiments, the sealing gasket 16 may be omitted, the bottom surface of the sealing flange 14 and/or the top surface of the sealing body 15 is provided with an adhesive storage groove, the sealing cover 13 and the sealing body 15 are bonded and fixed together by filling the adhesive storage groove with a sealing adhesive, and the sealing performance is ensured. In other embodiments, the sealing body 15 may be a plate welded to the bus top skin 3. In other embodiments, the sealing body 15 may be directly a part of the bus top skin. In other embodiments, the sealing gasket 16 is disposed on the bottom surface of the sealing flange 14. In other embodiments, the sealing flange 14 is omitted, and the sealing cover 13 is directly mounted on the bus top by the structural adhesive.

The sealing cover 13 and the top portion of the bus body form a sealed battery accommodating chamber, and the battery module 5 is located in the battery accommodating chamber. Compared with the method in the prior art of fixing the battery pack on the top portion of the bus body, there is no need to dispose a side plate, a top plate, and other structures of the battery pack, which saves materials, achieves lightweight, and saves space so that more battery modules 5 may be arranged in a limited space, which is beneficial to improving the endurance mileage of the new energy bus.

In this embodiment, the passenger region 1 and the chamber 12 are connected through the window and the window body 11. When the passenger region 1 and the battery module 5 both need to be cooled, the air conditioning system simultaneously cools the liquid heat exchange plate 6 and the passenger region 1. The top surface of the liquid heat exchange plate 6 exchanges heat with the battery module 5 to cool the battery module 5, and the bottom surface of the liquid heat exchange plate 6 exchanges heat with the chamber 12 to cool the chamber 12. In this case, the controller controls the motor to open the window body 11, and the blower 10 transfers the cold air in the chamber 12 to the passenger region 1. A same working process applies to a usage condition of heating. When only the passenger region 1 or only the battery module 5 is cooled or heated, the window body 11 closes the window, and heat exchange between the passenger region 1 and the chamber 12 is no longer performed. The disposition of the chamber 12, the window, and the window body 11 can prevent the cooling energy or heating energy at the bottom portion of the liquid heat exchange plate 6 from being dissipated in the air and cannot be effectively utilized, thereby improving the energy utilization of the entire vehicle.

In other embodiments, the window body 11 is manually rotated, or the window body 11 may be detachably mounted on the passenger region top floor 2.

In other embodiments, the bus top skin 3 remains intact, and the chamber 12 exchanges heat with the liquid heat exchange plate 6 through the bus top skin 3. Although the heat exchange efficiency is reduced, the heat utilization is still improved compared with the prior art.

Finally, it should be pointed out that the above description is only preferred embodiments of the invention and is not intended to limit the invention. Although the invention has been described in detail with reference to the above-mentioned examples, it is still possible for those skilled in the art to modify the technical means described in the above-mentioned examples without creative work, or to make equal substitutions of some or all of the technical configurations therein. Any modifications, equivalent substitutions, and improvements etc. made within the scope of the claims shall fall within the protection scope of the present invention.

## Claims

1. A new energy bus, comprising a bus body, the bus body comprising a bus top frame (9) located on a top portion, a bus top skin (3) covering a top portion of the bus top frame (9), and a passenger region top floor (2) located below the bus top frame (9), wherein the bus top frame (9) is fixedly provided with a liquid heat exchange plate (6), the liquid heat exchange plate (6) is provided with a coolant inlet and a coolant outlet that are connected to an air conditioning system, a top surface of the liquid heat exchange plate (6) is fixedly provided with a battery module (5), the bus top skin (3) is directly or indirectly mounted with a sealing cover (13) in a sealing manner covering an outer portion of the battery module (5), a filling body is disposed between the liquid heat exchange plate (6) and the passenger region top floor (2) and forms a sealed chamber (12) with the liquid heat exchange plate (6) and the passenger region top floor (2) in a surrounding manner, a position on the passenger region top floor (2) corresponding to the chamber (12) is provided with a window in communication with a passenger region (1), the window is provided with a window body (11) that opens and closes the window, and the chamber (12) is provided with a blower (10) inside for blowing air to the passenger region (1) through the window.

2. The new energy bus according to claim 1, wherein the bus top skin (3) is provided with an opening at the chamber (12), so that the liquid heat exchange plate (6) is directly communicated with the chamber (12).

3. The new energy bus according to claim 2, wherein a top portion of the filling body is in a sealing abutment on the liquid heat exchange plate (6), and a bottom portion of the filling body is in a sealing abutment on the passenger region top floor (2) to form the chamber (12); or the liquid heat exchange plate (6) is supported on the bus top skin (3) and is in a sealing fit with the bus top skin (3), a top portion of the filling body is in a sealing abutment on the bus top skin (3), and a bottom portion of the filling body is in a sealing abutment on the passenger region top floor (2) to form the chamber (12).

4. The new energy bus according to claim 2, wherein the blower (10) is fixedly disposed on a bottom surface of the liquid heat exchange plate (6).

5. The new energy bus according to claim 1, wherein the window body (11) is rotatably mounted on the passenger region top floor (2), the new energy bus comprises a motor that drives the window body (11) to rotate to open and close the window, the new energy bus further comprises a controller for controlling start and stop of the motor and a rotation direction, and the controller is configured to control the motor to open the window when both the battery module (5) and the passenger region (1) are cooled or heated and control the motor to close the window when only one of the battery module (5) and the passenger region (1) is cooled or heated.

6. The new energy bus according to any one of claims 1 to 5, wherein an outer side of an edge of the liquid heat exchange plate (6) is provided with a mounting ear (8), and the mounting ear (8) is provided with a bolt through hole; the bus top frame (9) is provided with a threaded hole or pre-welded with a nut, the new energy bus comprises a bolt (7) running through the bolt through hole of the mounting ear (8) and screwed into the threaded hole or the nut, and the bolt (7) fixes the liquid heat exchange plate (6) on the bus top frame (9).

7. The new energy bus according to any one of claims 1 to 5, wherein an edge position of the sealing cover (13) is provided with a sealing flange (14), one of a bottom surface of the sealing flange (14) and a top surface of the bus top skin (3) is provided with a sealing gasket (16), the sealing flange (14) is provided with a bolt through hole, the bus top skin (3) is provided with a threaded hole or pre-welded with a nut, the new energy bus comprises a bolt (7) running through the bolt through hole of the sealing flange (14) and screwed into the threaded hole or the nut on the bus top skin (3), the bolt (7) fixes the sealing flange (14) on the bus top skin (3), and the elastic deformation of sealing gasket (16) is to ensure sealing performance between the sealing flange (14) and the bus top skin (3).

8. The new energy bus according to any one of claims 1 to 5, wherein an edge position of the sealing cover (13) is provided with a sealing flange (14), a position on the bus top skin (3) corresponding to the sealing flange (14) is welded with a sealing body (15), one of a bottom surface of the sealing flange (14) and a top surface of the sealing body (15) is provided with a sealing gasket (16), the sealing flange (14) is provided with a bolt through hole, the sealing body (15) is provided with a threaded hole or pre-welded with a nut, the new energy bus comprises a bolt (7) running through the bolt through hole of the sealing flange (14) and screwed into the threaded hole or the nut on the sealing body (15), the bolt (7) fixes the sealing flange (14) on the sealing body (15), and the elastic deformation of sealing gasket (16) is to ensure sealing performance between the sealing flange (14) and the sealing body (15).

9. The new energy bus according to any one of claims 1 to 5, wherein an edge position of the sealing cover (13) is provided with a sealing flange (14), a top surface of the sealing flange (14) and/or a bottom surface of the bus top skin (3) is provided with an adhesive storage groove, and the adhesive storage groove is configured to store a sealing adhesive to bond the sealing flange (14) and the bus top skin (3) together and ensure sealing performance between the sealing flange (14) and the bus top skin (3).

10. The new energy bus according to any one of claims 1 to 5, wherein an edge position of the sealing cover (13) is provided with a sealing flange (14), a position on the bus top skin (3) corresponding to the sealing flange (14) is welded with a sealing body (15), a bottom surface of the sealing flange (14) and/or a top surface of the sealing body (15) is provided with an adhesive storage groove, and the adhesive storage groove is configured to store a sealing adhesive to bond the sealing flange (14) and the sealing body (15) together and ensure sealing performance between the sealing flange (14) and the sealing body (15).

## Patentansprüche

1. Mit neuen Energien betriebener Bus, der eine Buskarosserie umfasst, wobei die Buskarosserie einen Bus-Dachrahmen (9) umfasst, der sich an einem oberen Abschnitt befindet, eine obere Hülle (3) des Busses, die einen oberen Abschnitt des Bus-Dachrahmens (9) bedeckt, und eine Decke (2) des Fahrgastraums, die sich unter dem Bus-Dachrahmen (9) befindet, wobei der Bus-Dachrahmen (9) fest mit einer Flüssigkeits-Wärmetauscherplatte (6) versehen ist, die Flüssigkeits-Wärmetauscherplatte (6) mit einem Kühlmitteleinlass und einem Kühlmittelauslass versehen ist, die mit einer Klimaanlage verbunden sind, eine obere Fläche der Flüssigkeits-Wärmetauscherplatte (6) fest mit einem Batteriemodul (5) versehen ist, an der oberen Hülle (3) des Busses direkt oder indirekt abdichtend eine Abdichtungsabdeckung (13) montiert ist, die einen Außenabschnitt des Batteriemoduls (5) abdeckt, ein Füllkörper zwischen der Flüssigkeits-Wärmetauscherplatte (6) und der Decke (2) des Fahrgastraums angeordnet ist und die Flüssigkeits-Wärmetauscherplatte (6) und die Decke (2) des Fahrgastraums umschließend eine abgedichtete Kammer (12) ausbildet, eine Stelle in der Decke (2) des Fahrgastraums, die der Kammer (12) entspricht, mit einem Fenster in Verbindung mit einem Fahrgastraum (1) versehen ist, das Fenster mit einem Fensterhauptteil (11) versehen ist, der das Fenster öffnet und schließt, und die Kammer (12) mit einem Gebläse (10) darin versehen ist, damit durch das Fenster Luft in den Fahrgastraum (1) geblasen wird.

2. Mit neuen Energien betriebener Bus nach Anspruch 1, wobei die obere Hülle (3) des Busses mit einer Öffnung in der Kammer (12) versehen ist, sodass die Flüssigkeits-Wärmetauscherplatte (6) in direkter Verbindung zur Kammer (12) steht.

3. Mit neuen Energien betriebener Bus nach Anspruch 2, wobei ein oberer Abschnitt des Füllkörpers abdichtend an der Flüssigkeits-Wärmetauscherplatte (6) anliegt und ein unterer Abschnitt des Füllkörpers abdichtend an der Decke (2) des Fahrgastraums anliegt, um die Kammer (12) auszubilden; oder die Flüssigkeits-Wärmetauscherplatte (6) auf der oberen Hülle (3) des Busses gehalten ist und an der oberen Hülle (3) des Busses abgedichtet ist, ein oberer Abschnitt des Füllkörpers abdichtend an der oberen Hülle (3) des Busses anliegt und ein unterer Abschnitt des Füllkörpers abdichtend an der Decke (2) des Fahrgastraums anliegt, um die Kammer (12) auszubilden.

4. Mit neuen Energien betriebener Bus nach Anspruch 2, wobei das Gebläse (10) fest an einer unteren Fläche der Flüssigkeits-Wärmetauscherplatte (6) angeordnet ist.

5. Mit neuen Energien betriebener Bus nach Anspruch 1, wobei der Fensterhauptteil (11) drehbar an der Decke (2) des Fahrgastraums montiert ist, der mit neuen Energien betriebene Bus einen Motor umfasst, der den Fensterhauptteil (11) zum Drehen antreibt, um das Fenster zu öffnen und zu schließen, der mit neuen Energien betriebene Bus ferner eine Steuerung zum Steuern des Anlaufens und Anhaltens des Motors und einer Drehrichtung umfasst und die Steuerung dazu ausgestaltet ist, den Motor so zu steuern, dass er das Fenster öffnet, wenn sowohl das Batteriemodul (5) als auch der Fahrgastraum (1) gekühlt oder erwärmt werden, und den Motor so zu steuern, dass er das Fenster schließt, wenn von dem Batteriemodul (5) und dem Fahrgastraum (1) lediglich eins gekühlt oder erwärmt wird.

6. Mit neuen Energien betriebener Bus nach einem der Ansprüche 1 bis 5, wobei eine Außenseite einer Kante der Flüssigkeits-Wärmetauscherplatte (6) mit einer Montageöse (8) versehen ist und die Montageöse (8) mit einem Schraubendurchgangsloch versehen ist; der Bus-Dachrahmen (9) mit einer Gewindebohrung oder mit einer vorgeschweißten Mutter versehen ist, der mit neuen Energien betriebene Bus eine Schraube (7) umfasst, die durch das Schraubendurchgangsloch der Montageöse (8) verläuft und in die Gewindebohrung oder die Mutter geschraubt ist, und die Schraube (7) die Flüssigkeits-Wärmetauscherplatte (6) am Bus-Dachrahmen (9) fixiert.

7. Mit neuen Energien betriebener Bus nach einem der Ansprüche 1 bis 5, wobei eine Randposition der Abdichtungsabdeckung (13) mit einem Dichtflansch (14) versehen ist, eine untere Fläche des Dichtflanschs (14) oder eine obere Fläche der oberen Hülle (3) des Busses mit einer Dichtung (16) versehen ist, der Dichtflansch (14) mit einem Schraubendurchgangsloch versehen ist, die obere Hülle (3) des Busses mit einer Gewindebohrung oder mit einer vorgeschweißten Mutter versehen ist, der mit neuen Energien betriebene Bus eine Schraube (7) umfasst, die durch das Schraubendurchgangsloch des Dichtflanschs (14) verläuft und in die Gewindebohrung oder die Mutter an der oberen Hülle (3) des Busses geschraubt ist, die Schraube (7) den Dichtflansch (14) an der oberen Hülle (3) des Busses fixiert und die elastische Verformung der Dichtung (16) dazu dient, die Abdichtung zwischen dem Dichtflansch (14) und der oberen Hülle (3) des Busses zu gewährleisten.

8. Mit neuen Energien betriebener Bus nach einem der Ansprüche 1 bis 5, wobei eine Randposition der Abdichtungsabdeckung (13) mit einem Dichtflansch (14) versehen ist, eine Stelle an der oberen Hülle (3) des Busses, die dem Dichtflansch (14) entspricht, mit einem Abdichtungskörper (15) verschweißt ist, eine untere Fläche des Dichtflanschs (14) oder eine obere Fläche des Abdichtungskörpers (15) mit einer Dichtung (16) versehen ist, der Dichtflansch (14) mit einem Schraubendurchgangsloch versehen ist, der Abdichtungskörper (15) mit einer Gewindebohrung oder mit einer vorgeschweißten Mutter versehen ist, der mit neuen Energien betriebene Bus eine Schraube (7) umfasst, die durch das Schraubendurchgangsloch des Dichtflanschs (14) verläuft und in die Gewindebohrung oder die Mutter am Abdichtungskörper (15) geschraubt ist, die Schraube (7) den Dichtflansch (14) am Abdichtungskörper (15) fixiert und die elastische Verformung der Dichtung (16) dazu dient, die Abdichtung zwischen dem Dichtflansch (14) und dem Abdichtungskörper (15) zu gewährleisten.

9. Mit neuen Energien betriebener Bus nach einem der Ansprüche 1 bis 5, wobei eine Randposition der Abdichtungsabdeckung (13) mit einem Dichtflansch (14) versehen ist, eine obere Fläche des Dichtflanschs (14) und/oder eine untere Fläche der oberen Hülle (3) des Busses mit einer Rille zum Unterbringen von Klebstoff versehen ist und die Rille zum Unterbringen von Klebstoff dazu ausgestaltet ist, einen Klebstoff zum Abdichten aufzunehmen, der den Dichtflansch (14) und die obere Hülle (3) des Busses zusammenklebt und die Abdichtung zwischen dem Dichtflansch (14) und der oberen Hülle (3) des Busses gewährleistet.

10. Mit neuen Energien betriebener Bus nach einem der Ansprüche 1 bis 5, wobei eine Randposition der Abdichtungsabdeckung (13) mit einem Dichtflansch (14) versehen ist, eine Stelle an der oberen Hülle (3) des Busses, die dem Dichtflansch (14) entspricht, mit einem Abdichtungskörper (15) verschweißt ist, eine untere Fläche des Dichtflanschs (14) und/oder eine obere Fläche des Abdichtungskörpers (15) mit einer Rille zum Unterbringen von Klebstoff versehen ist und die Rille zum Unterbringen von Klebstoff dazu ausgestaltet ist, einen Klebstoff zum Abdichten aufzunehmen, der den Dichtflansch (14) und den Abdichtungskörper (15) zusammenklebt und die Abdichtung zwischen dem Dichtflansch (14) und dem Abdichtungskörper (15) gewährleistet.

## Revendications

1. Bus fonctionnant aux nouvelles énergies, comprenant une carrosserie de bus, la carrosserie de bus comprenant un châssis supérieur de bus (9) situé sur une partie supérieure, un revêtement supérieur de bus (3) recouvrant une partie supérieure du châssis supérieur de bus (9), et un plancher supérieur de zone passagers (2) situé sous le châssis supérieur de bus (9), dans lequel le châssis supérieur de bus (9) est pourvu de manière fixe d'une plaque d'échange thermique à liquide (6), la plaque d'échange thermique à liquide (6) est pourvue d'une entrée de réfrigérant et d'une sortie de réfrigérant qui sont connectées à un système de climatisation, une surface supérieure de la plaque d'échange thermique à liquide (6) est pourvue de manière fixe d'un module de batterie (5), le revêtement supérieur de bus (3) est monté directement ou indirectement avec un couvercle d'étanchéité (13) d'une manière étanche recouvrant une partie extérieure du module de batterie (5), un corps de remplissage est disposé entre la plaque d'échange thermique à liquide (6) et le plancher supérieur de zone passagers (2) et forme une chambre étanche (12) avec la plaque d'échange thermique à liquide (6) et le plancher supérieur de zone passagers (2) de manière à l'entourer, une position sur le plancher supérieur de zone passagers (2) correspondant à la chambre (12) est pourvue d'une fenêtre en communication avec une zone passagers (1), la fenêtre est pourvue d'un corps de fenêtre (11) qui ouvre et ferme la fenêtre, et la chambre (12) est pourvue d'un ventilateur (10) à l'intérieur pour souffler de l'air vers la zone passagers (1) à travers la fenêtre.

2. Bus fonctionnant aux nouvelles énergies selon la revendication 1, dans lequel le revêtement supérieur de bus (3) est pourvu d'une ouverture au niveau de la chambre (12), de telle sorte que la plaque d'échange thermique à liquide (6) est directement en communication avec la chambre (12).

3. Bus fonctionnant aux nouvelles énergies selon la revendication 2, dans lequel une partie supérieure du corps de remplissage est en butée étanche sur la plaque d'échange thermique à liquide (6), et une partie inférieure du corps de remplissage est en butée étanche sur le plancher supérieur de zone passagers (2) pour former la chambre (12) ; ou la plaque d'échange thermique à liquide (6) est supportée sur le revêtement supérieur de bus (3) et est en ajustement étanche avec le revêtement supérieur de bus (3), une partie supérieure du corps de remplissage est en butée étanche sur le revêtement supérieur de bus (3), et une partie inférieure du corps de remplissage est en butée étanche sur le plancher supérieur de zone passagers (2) pour former la chambre (12).

4. Bus fonctionnant aux nouvelles énergies selon la revendication 2, dans lequel le ventilateur (10) est disposé de manière fixe sur une surface inférieure de la plaque d'échange thermique à liquide (6).

5. Bus fonctionnant aux nouvelles énergies selon la revendication 1, dans lequel le corps de fenêtre (11) est monté de manière rotative sur le plancher supérieur de zone passagers (2), le bus fonctionnant aux nouvelles énergies comprend un moteur qui entraîne le corps de fenêtre (11) en rotation pour ouvrir et fermer la fenêtre, le bus fonctionnant aux nouvelles énergies comprend en outre un dispositif de commande pour commander le démarrage et l'arrêt du moteur et une direction de rotation, et le dispositif de commande est configuré pour commander le moteur afin d'ouvrir la fenêtre lorsque le module de batterie (5) et la zone passager (1) sont tous deux refroidis ou chauffés et pour commander le moteur afin de fermer la fenêtre lorsque seul l'un du module de batterie (5) et de la zone passager (1) est refroidi ou chauffé.

6. Bus fonctionnant aux nouvelles énergies selon l'une quelconque des revendications 1 à 5, dans lequel un côté extérieur d'un bord de la plaque d'échange thermique à liquide (6) est pourvu d'une oreille de montage (8), et l'oreille de montage (8) est pourvue d'un trou traversant pour boulon ; le cadre supérieur de bus (9) est pourvu d'un trou fileté ou pré-soudé avec un écrou, le bus fonctionnant aux nouvelles énergies comprend un boulon (7) passant à travers le trou traversant pour boulon de l'oreille de montage (8) et vissé dans le trou fileté ou l'écrou, et le boulon (7) fixe la plaque d'échange thermique à liquide (6) sur le châssis supérieur de bus (9).

7. Bus fonctionnant aux nouvelles énergies selon l'une quelconque des revendications 1 à 5, dans lequel une position de bord du couvercle d'étanchéité (13) est pourvue d'une bride d'étanchéité (14), l'une d'une surface inférieure de la bride d'étanchéité (14) et d'une surface supérieure du revêtement supérieur de bus (3) est pourvue d'un joint d'étanchéité (16), la bride d'étanchéité (14) est pourvue d'un trou traversant pour boulon, le revêtement supérieur de bus (3) est pourvu d'un trou fileté ou pré-soudé avec un écrou, le bus fonctionnant aux nouvelles énergies comprend un boulon (7) passant à travers le trou traversant pour boulon de la bride d'étanchéité (14) et vissé dans le trou fileté ou l'écrou sur le revêtement supérieur de bus (3), le boulon (7) fixe la bride d'étanchéité (14) sur le revêtement supérieur de bus (3), et la déformation élastique du joint d'étanchéité (16) est destinée à assurer la performance d'étanchéité entre la bride d'étanchéité (14) et le revêtement supérieur de bus (3).

8. Bus fonctionnant aux nouvelles énergies selon l'une quelconque des revendications 1 à 5, dans lequel une position de bord du couvercle d'étanchéité (13) est pourvue d'une bride d'étanchéité (14), une position sur le revêtement supérieur de bus (3) correspondant à la bride d'étanchéité (14) est soudée avec un corps d'étanchéité (15), l'une d'une surface inférieure de la bride d'étanchéité (14) et d'une surface supérieure du corps d'étanchéité (15) est pourvue d'un joint d'étanchéité (16), la bride d'étanchéité (14) est pourvue d'un trou traversant pour boulon, le corps d'étanchéité (15) est pourvu d'un trou fileté ou pré-soudé avec un écrou, le bus fonctionnant aux nouvelles énergies comprend un boulon (7) passant à travers le trou traversant pour boulon de la bride d'étanchéité (14) et vissé dans le trou fileté ou l'écrou du corps d'étanchéité (15), le boulon (7) fixe la bride d'étanchéité (14) sur le corps d'étanchéité (15), et la déformation élastique du joint d'étanchéité (16) est destinée à assurer la performance d'étanchéité entre la bride d'étanchéité (14) et le corps d'étanchéité (15).

9. Bus fonctionnant aux nouvelles énergies selon l'une quelconque des revendications 1 à 5, dans lequel une position de bord du couvercle d'étanchéité (13) est pourvue d'une bride d'étanchéité (14), une surface supérieure de la bride d'étanchéité (14) et/ou une surface inférieure du revêtement supérieur de bus (3) est pourvue d'une rainure de stockage d'adhésif, et la rainure de stockage d'adhésif est configurée pour stocker un adhésif d'étanchéité afin de relier la bride d'étanchéité (14) et le revêtement supérieur de bus (3) ensemble et d'assurer une performance d'étanchéité entre la bride d'étanchéité (14) et le revêtement supérieur de bus (3).

10. Bus fonctionnant aux nouvelles énergies selon l'une quelconque des revendications 1 à 5, dans lequel une position de bord du couvercle d'étanchéité (13) est pourvue d'une bride d'étanchéité (14), une position sur le revêtement supérieur de bus (3) correspondant à la bride d'étanchéité (14) est soudée avec un corps d'étanchéité (15), une surface inférieure de la bride d'étanchéité (14) et/ou une surface supérieure du corps d'étanchéité (15) est pourvue d'une rainure de stockage d'adhésif, et la rainure de stockage d'adhésif est configurée pour stocker un adhésif d'étanchéité afin de relier la bride d'étanchéité (14) et le corps d'étanchéité (15) ensemble et d'assurer la performance d'étanchéité entre la bride d'étanchéité (14) et le corps d'étanchéité (15).
